# EUROPÄISCHE PATENTANMELDUNG

(11) **EP 0 914 019 A2**
(43) Veröffentlichungstag der Anmeldung: **06.05.1999**
(21) Anmeldenummer: 98115563.3
(22) Anmeldetag: 19.08.1998
(51) Int. Cl.: H04Q 11/06

(54) **Schaltungsanordnung für blockierungsfreie Koppelfelder**

(30) Priorität: 29.10.1997 DE 19748956
(71) Anmelder: DeTeWe - Deutsche Telephonwerke Aktiengesellschaft & Co., 10997 Berlin (DE)
(72) Erfinder: Kirmse, Wilfried, Dr., D-13088 Berlin (DE)

(57) **Zusammenfassung**

Eine Schaltungsanordnung zur Steuerung von unterschiedlichen Signal-Bitraten von blockierungsfreien Koppelfeldanordnungen für 2 Mbit/s-Digitalsignale ist dadurch gekennzeichnet, daß das Koppelfeld aus der Hintereinanderschaltung einer herkömmlichen PCM-Koppelanordnung (Time-Space-Switch) und eines Submultiplexers (Sub-Mux) besteht, wobei die Ausgangssignale der PCM-Koppelanordnung (Time-Space-Switch) in einem speziellen Zwischenformat (Z) ausgegeben werden, die es dem Submultiplexer (Sub-Mux) gestatten durch einfache Demulitplexoperationen Durchschaltungen unterschiedlicher Schaltebenen (8k, 64k) zu erzeugen, wobei die Schaltinformationen für die 8k-Ebene auf die PCM-Koppelanordnung und den Submultiplexer aufgeteilt wird.

## Beschreibung

Die Erfindung bezieht sich auf eine Schaltungsanordnung von unterschiedlichen Signalbitraten von blockierungsfreien Koppelfeldanordnungen für 2 Mbit/s-Digitalsignale.

In Mobilfunknetzen werden zur Erhöhung der Kanalkapazität bei der Codierung der zu übertragenden digitalisierten Sprachkanäle Übertragungsraten von 16 kbit/s und zukünftig auch 8 kbit/s verwendet. Für verschiedene Steuerfunktionen werden teilweise ebenfalls 16 kbit/s- oder 8 kbit/s-Kanäle genutzt. In digitalen Bündelfunknetzen beträgt die Übertragungsrate des Nutzsignals 8 kbit/s. Gegenüber der klassischen PCM-Übertragungstechnik mit einem digitalen Übertragungskanal von 64 kbit/s erhöht sich die Übertragungskapazität um den Faktor 4 bzw. 8. Somit stehen in einem 64 k-Kanal des 2 Mbit/s-Übertragungssignals des PCM-Systems 4 oder 8 Teilnehmerkanäle zur Verfügung.

Damit die vorhandene Übertragungskapazität des 2 Mbit/s-Digitalsignals maximal ausgenutzt werden kann, z. B. auf Mietleitungen, müssen diese Subkanäle innerhalb eines Zeitschlitzes flexibel handhabbar sein, d. h. einzeln und nicht nur im 4er- bzw. 8er-Block schaltbar sein. Dies ist z. B. für ein optimales Kanalmanagment bei der Versorgung der sogenannten Base-Transceiver-Stations (BTS) von Mobilfunknetzen der Fall, bei dem künftig die Zuordnung, d. h. Anschaltung der Mobilkanäle zu den einzelnen BTS in Abhängigkeit von der zeitlichen und örtlichen Verteilung des Verkehrsaufkommens, flexibel sein soll.

Neben dieser Anwendung in der modernen digitalen Übertragungstechnik benötigt auch die die digitale Vermittlungstechnik einen flexiblen Zugriff auf die Subkanäle. Hier werden die Teilnehmer durch Zusammenschaltung von Übertragungskanälen für die Dauer des Gespräches verbunden und danach wieder getrennt, z. B. bei der Teilnehmervermittlung im digitalen Bündelfunk.

Bei der ersten Anwendung spricht man von einer Cross-Connect-Funktionalität, d. h. elektronischer Schaltverteiler für Übertragungskanäle, und im zweiten Fall von einer Switch-Funktionalität, d. h. Vermittlungsfunktion für Teilnehmer, der dazu erforderlichen Koppelfeldmatrix.

Die beiden Fällen gemeinsame Schaltfunktionalität besteht in der Änderung der Raum- und Zeitlage der Übertragungskanäle zwischen Eingangs- und Ausgangssignal. Sie unterscheiden sich vom Koppelfeld aus gesehen lediglich in der Dauer der zu schaltenden Verbindung.

Da die Geräte, Cross-Connect-System oder Switch, welche die hier charakterisierten Koppelfelder enthalten, in den unteren Netzebenen eingesetzt werden, sind meist Schaltkapazitäten für 16 oder 32 DS2-Signalports ausreichend, wobei das Datensignal DS2 die Zusammenfassung von Signaleingang und - ausgang umfaßt.

In den genannten Anwendungsfällen des Koppelfeldes mit einem genormten Pulsrahmen für die 2 Mbit/s-Digitalsignale, z. B. nach ITU G.703 und G.704, ist eine Schaltebene von 8 kbit/s erforderlich. Für eine universelle Anwendung des Koppelfeldes in heutigen und künftigen Übertragungsnetzen ist es wünschenswert, daß auch die bisher eingesetzten Schaltfunktionen des klassischen PCM-Kombinationsvielfaches, mit einer Schaltebene von 64 kbit/s, weiterhin in vollem Leistungsumfang zur Verfügung gestellt wird.

Zur Schaltung der Raumlage und gleichzeitigen Änderung bzw. Schaltung in die Zeitlage kommt daher die uneingeschränkte, d. h. blockierungsfreie Veränderung der Bitposition eines 8k-Kanals dazu. Das heißt für die maximale Schaltkapazität ist aus allen ankommenden DS2-Signalen n ein 8k-Signal aus einer beliebigen Bitposition k (Bit 0...7), eines beliebigen Zeitschlitzes x (ZS0...ZS31) in eine wiederum wahlfreie Kombination aus Bitposition l und Zeitschlitz y in einem abgehenden DS2-Signal m zu rangieren. Die Schaltung von 16 kbit/s oder anderen ganzzahligen Vielfachen von 8 kbit/s kann durch die steuerungsseitige Zusammenfassung von 8 kbit/s vorgenommen werden. Für die Realisierung derartiger Koppelfeldanordnungen mit den Schaltebenen von 8 kbit/s und 64 kbit/s sind ferner die folgenden funktionalen Forderungen und Randbedingungen zu berücksichtigen:
Es ist eine portweise Konfigurierbarkeit sowie eine generelle Blockierungsfreiheit der Schaltebenen für 8 kbit/s und 64 kbit/s zu gewährleisten.

Weiterhin ist die Rahmenintegrität für Signalgruppen n*8 kbit/s bzw. n*64 kbit/s zu sichern.
Die Signaldurchlaufzeit durch das Koppelfeld soll möglichst gering sein. Abgesehen von Schaltungen in der Zeitlage soll die Verzögerung im Raster des PCM-Rahmens bleiben.
Ferner muß die Schaltungsmöglichkeit für die den Nutzkanälen zugeordneten Signalisierungskanälen bei 64 kbit/s-Schaltebenen gegeben sein.
Schließlich ist das Einfügen von portindividuell konfigurierbaren Codes, sogenannte Füllworte, Idle- und im Fehlerfall, Trunk-Codes, zu ermöglichen.
Koppelfelder mit 64 kbit/s-Schaltebene und die darauf bezogenen Forderungen, einschließlich der Schaltungen für "Channel Associated Signaling" (CAS), die eine Signalisierung im Zeitschlitz 16 beinhaltet, sind bekannt (D. Conrads "Datenkommunikation", Vieweg Verlag). Zur Realisierung derartiger 64 k-Koppelfelder werden Standard-Koppelfeldbausteine eingesetzt.

Cross-Connect-Systeme oder Switchs mit Koppelfeldern, die eine Schaltebene von 8 kbit/s realisieren, sind gegenwärtig erst in der Entwicklung. Insbesondere gibt es derzeit keine Koppelbausteine, die den Zugriff auf einzelne Bits, also auf den 8 kbit/s-Kanal im PCM-Signal erlauben. Die Entwicklung solcher Koppelfeld-Bauelemente für eine 8 k-Schaltebene ist aufwendig. Solche Bausteine würden sehr komplex und damit unwirtschaftlich werden, vor allem in Bezug auf die vorstehenden genannnten Zusatzforderungen.

Der Erfindung lag daher die Aufgabe zugrunde, unter Verwendung bekannter Standardbausteine eine Koppelfeldanordnung für die 8 kbit/s- und 64 kbit/s-Schaltebenen unter Berücksichtigung der vorgenannten Forderungen und Randbedingungen zu schaffen.

Diese Aufgabe ist durch die Erfindung gelöst, wie sie im ersten Patentanspruch dargelegt ist. Weitere vorteilhafte Maßnahmen sind Gegenstand der Unteransprüche.

Die Erfindung wird nachfolgend anhand einer aus sieben Figuren bestehenden Zeichnung näher erläutert. In der Zeichnung zeigen die
- Fig. 1: die generelle Blockstruktur der Erfindung, die
- Fig. 2: das Blockschaltbild für eine Zwischenformat-Erzeugung durch Zeitmultiplex, die
- Fig. 3: das Blockschaltbild für eine Zwischenformat-Erzeugung durch Raummultiplex, die
- Fig. 4: das Blockschaltbild für eine Zwischenformat-Bildung durch Raum-Zeitmultiplex, die
- Fig. 5: das Blockschaltbild zur Sicherung der Rahmenintegrität und Realisierung einer Laufzeitvorkompensation, die
- Fig. 6: das Blockschaltbild für integrierte 64 k-CAS-Koppelfeldfunktionen und die
- Fig. 7: das Blockschaltbild für das Einfügen portindividueller Idle- und Trunk-Codes.

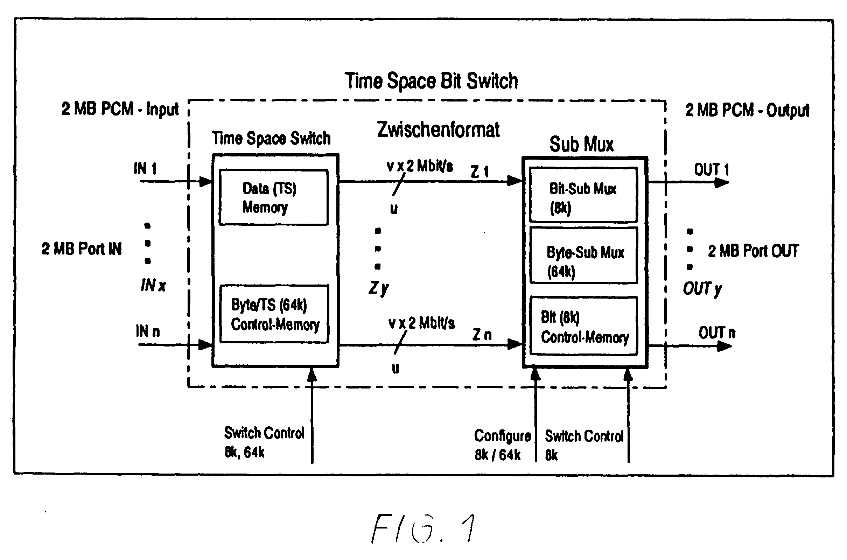

Das Koppelfeld für die Schaltebenen 8 kbit/s und 64 kbit/s, nachfolgend als 8 k- und 64 k-Ebene bezeichnet, besteht aus der Hintereinanderschaltung eines üblichen PCM-Kombinationsvielfaches, Time-Space-Switch, und eines Submultiplexers, Sub-Mux, wie in Figur 1 schematisch dargestellt. Der Einfachheit halber wird in den nachfolgenden Darstellungen der Terminus Submultiplexer bzw. Sub-Mux verwendet. Die tatsächliche Funktion dieses Schaltelementes ist die eines Demultiplexers, d. h. die Auswahl eines bestimmten Teilsignals aus einem strukturiert zusammengesetzten Multiplexsignal.

Die Koppelbausteine des ersten Schaltungsteils realisieren die wahlfreie, programmierbare Zuordnung von den Eingangs- zu den Ausgangskanälen beider Schaltebenen, IN zu OUT. Die Ausgangssignale werden dabei in einem speziellen Zwischenformat Z ausgegeben, die es dem zweiten Schaltungsteil gestatten, durch einfache Demultiplexoperationen das 2 Mbit/s-Ausgangssignal mit den gewünschten Durchschaltungen sowohl auf der 8 k- als auch auf der 64 k-Ebene zu erzeugen.

Die Koppelfeldanordnung im ersten Schaltungsteil verarbeitet die Kanäle aller Eingangssignale, während der zweite Schaltungsteil das Zwischenformat Z jeweils nur für ein Ausgangssignal portbezogen verarbeitet. In der Figur 1 wird die Schaltfunktion bzw. Nachverarbeitung durch die Bezeichnung eines Eingangssignals mit INx und die Benennung des Zwischenformates mit Zy bzw. des Ausgangssignals mit OUTy symbolisiert. Die Indizes x und y sollen dabei, am Beispiel vom Eingangszeitschlitz x und Ausgangszeitschlitz y, die wahlfreie Zuordnung über alle Forts, d. h. DS2, Zeitschlitze, und im Falle der 8 k-Ebene, Subkanäle verdeutlichen. Mit den eingangs verwendeten Bezeichnungen ist die Schaltung eines 8 kbit/s-Kanals die Umsetzung des Eingangs INn,x,k zum Ausgang OUTm,y,l.

Die Blockierungsfreiheit wird in der Schaltungsanordnung durch die Schaltfunktionalität der verwendeten Koppelbausteine sowie durch deren direkte Zusammenschaltung hardwareseitig garantiert. Da lediglich relativ geringe Portanzahlen als Gesamtschaltkapazität erforderlich sind, maximal 16 oder 32, kann eine vom Prinzip her einstufige Anordnung der Standard-Koppelbausteine angewendet werden. Gegenüber den mehrstufigen, z. B. dreistufigen, Koppelanordnungen für sehr große Portzahlen bzw. Schaltkapazitäten, z. B. sogenannte Clos'sche Matrix, ist damit der Steuerungsaufwand softwareseitig minimal. Insbesondere ist kein extra Routingalgorithmus zur Sicherung der Blockierungsfreiheit erforderlich.

Die bekannte Funktion eines sogenannten PCM-Kombinationsvielfaches (Time-Space-Switch) ist durch den Speicher für die Eingangs-Zeitschlitze aller Forts in Figur 1 als Data-Memory bezeichnet und durch den programmierbaren Adreßspeicher für das wahlfreie Auslesen, in Figur 1 als Byte/TS Control-Memory genannt, versinnbildlicht. Die für die Funktion der Gesamtanordnung (Time-Space-Bit-Switch) erforderliche Betriebsart und die Steuerung der Durchschaltungen (Switch-Control 8k, 64k) im ersten Schaltungsteil wird im Zusammenhang mit dem jeweils zugeordneten Zwischenformat Z bei der Schaltungsbeschreibung der drei Varianten weiter unten erläutert.

Das Zwischenformat Z ist durch eine spezielle Kombination von Signal-Anzahl und deren Bitrate sowie Signalstruktur definiert. Es wird durch eine bestimmte Art der Konfiguration und durch die formatgerechte Durchschaltung im Teil Time-Space-Switch erzeugt. Abgesehen von den Realisierungsvarianten der drei verschiedenen Zwischenformate, die die Signalverarbeitung des Submultiplexers Sub-Mux bestimmen, gibt es pro Variante jeweils nur ein Teilsignalformat für die 8k- und ein weiteres Format für die 64k-Schaltebene.

Beide Schaltebenen benutzen die gleiche Betriebsart des PCM-Kombinationsvielfach Time-Space-Switch bzw. der dort verwendeten Standard-Koppelbausteine und damit gleiche Bitraten und nutzen dieselben Signale im Zwischenformat Z. Die Zwischenformate Z beider Schaltebenen unterscheiden sich jedoch in der Signalstruktur, wobei für die 64k-Ebene nur ein Teil des bei 8k verwendeten Formates genutzt wird. Die Format für 8k und 64k werden bei grundsätzlich gleicher Betriebsart der Koppelbausteine durch Schaltoperationen erzeugt, die für die Schaltebene spezifisch sind. Die Konfiguration der Schaltebene, in Figur 1 Configure 8k/64k, erfolgt implizit durch die jeweils spezifische Programmierung der Schaltungen in den Koppelbausteinen.

Im Submultiplexer Sub-Mux gibt es für jede Schaltebene eine Signalverarbeitung, die in Figur 1 mit Bit-Sub-Mux (8k) bzw. Byte-Sub-Mux (64k) bezeichnet sind. Die portweise Konfiguration der Schaltebene wird durch alternative Aktivierung, z. B. mit einem Konfigurations-Bit, des jeweiligen Submultiplexers explizit realisiert. Die eigentliche Funktion der beiden Submultiplexer für die drei Varianten ist auf das jeweilige Zwischenformat abgestimmt. Für die Funktion der 8k-Schaltebene, d. h. zur Steuerung des Bit-Sub-Mux durch die Switch-Control 8k ist dabei ein Auswahl-/Adressierungsspeicher erforderlich, in Figur 1 Bit-Control-Memory bezeichnet.

Im folgenden wird zunächst die Betriebsart des PCM-Kombinationsvielfaches und die Realisierung der 8k-Schaltebene erläutert.

Das Prinzip des durch einen Haltespeicher Byte-TS-Control-Memory gesteuerten Auslesens aus dem Sprachspeicher Data-Memory ist für die geforderte zusätzliche wahlfreie Änderung der Bitposition des 8 k-Kanals zu erweitern. Pro Zeitschlitz (Byte) eines abgehenden DS2-Signals werden acht Adressen im Haltespeicher benötigt, da jede der Bitpositionen im zu sendenden Zeitschlitz eine eigene Quelladresse haben muß. Bezogen auf die verwendeten Standardbausteine für PCM-Kombinationsvielfach hat das die Konsequenz, daß sich bei gegebener Länge des Haltespeichers die Zahl der insgesamt möglichen Ausgangskanäle, Timeslots/Bytes, um den Faktor 8 verringert. Für die Anzahl der zu verarbeitenden Eingangskanäle/Zeitschlitze trifft dies nicht zu, da ein und dasselbe Byte im Sprachspeicher durchaus achtmal als Quelle dienen kann.

Allerdings kann mit den verfügbaren Standardbausteinen nur auf Bytes/Timeslots komplett zurückgegriffen werden, d. h. es kann kein Bit einzeln im Sprachspeicher adressiert und in die Ausgangspuffer geschrieben bzw. gesendet werden. Deshalb werden, zusammen mit dem gewünschten Quellbit des Eingangssignals INx jeweils auch die restlichen, unerwünschten bzw. eigentlich nicht benötigten 7 Bits mitgenommen, d. h. es wird das komplette Quellbyte entnommen, in die gewünschte Raum- und Zeitlage, DS2-Signal und Zeitschlitz, geschaltet und im abgehenden Signal ausgegeben. Anstelle der 8 Bits pro Zeitschlitz werden also zunächst 8 Oktetts durchgeschaltet und als Zwischenformat Zy ausgegeben. Die Oktetts enthalten jeweils das eigentlich gewünschte Bit und 7 redundante Bits.

Die Raum- und Zeitlage dieser Gruppe von 8 Oktetts, die jeweils einem Zeitschlitz des Ausgangssignals zugeordnet ist, im Zwischenformat Zy und auch die Bit-Reihefolge der Quell-Oktetts innerhalb der Gruppe sind in ihrer Anordnung korrekt. Im ersten Oktett der Gruppe ist das erste Bit für den Ziel-Zeitschlitz enthalten, im zweiten Oktett das zweite Bit usw.

Als zweiter Signalverarbeitungsschritt wird ein einfacher Bit-Submultiplexer, Bit-Sub-Mux, nachgeschaltet, der aus den 8 Oktetts jeweils das eigentlich benötigte Bit entnimmt und zum Zeitschlitz des Ausgangssignals OUTy zusammenfügt.

Der 8k-Submultiplexer benötigt dazu eine 3 Bit-Adresse, Switch-Control 8k, für die Position des Quell-Bits im Oktett. Diese Bit-Adresse wird im Haltespeicher, Bit-Control-Memory, abgelegt, der eine Adreß-Reihenfolge bezüglich des abgegebenen DS2-Signals, d. h. Zeitschlitz-Byte und Bitposition, aufweist, wie sie im Haltespeicher des Standard-Koppelbausteins, Byte/TS-Control-Memory, bzw. im Zwischenformat vorgegeben ist.

Im Unterschied zu den Standard-Koppelbausteinen, die meist einen gemeinsamen Haltespeicher für alle Ausgangssignale haben, ist der Haltespeicher im Sub-Mux wegen der portorientierten Signalverarbeitung vom Prinzip her auch separat für jedes Ausgangssignal realisierbar. Trotz dieser möglichen direkten Zuordnung können die Signalverarbeitungen mehrerer Ausgänge auch in gemeinsamen Schaltungsteilen verschachtelt realisiert werden.

Die Haltespeicher beider Schaltungsteile bilden logisch gesehen eine Einheit. Gemeinsam enthalten sie die Quell-Adresse für die Schaltung der 8k-Kanäle, die sich aus der Nummer (ld n-Bit-Adresse für n-Ports) des Eingangssignals (Raumlage), aus der Nummer (5-Bit-Adresse) des Zeitschlitzes im Rahmen (32 Zeitlagen) und aus der Nummer (3-Bit-Adresse) des Bits im Oktett zusammensetzt. Das Adressierungsschema für die Quell-Adressen ist dabei durch das zyklische Einschreiben der Zeitschlitze aller Eingangssignale in den Sprachspeicher, Data-Memory, gegeben. Für eine komplette Schaltung auf 8k-Ebene ist also durch die Systemsteuerung, Switch-Control 8k, die Koppelfeldinformation auf die beiden Funktionsblöcke bzw. Schaltungsteile aufzuteilen und die Quell-Adressen sind in die beiden Haltespeicher abzulegen.

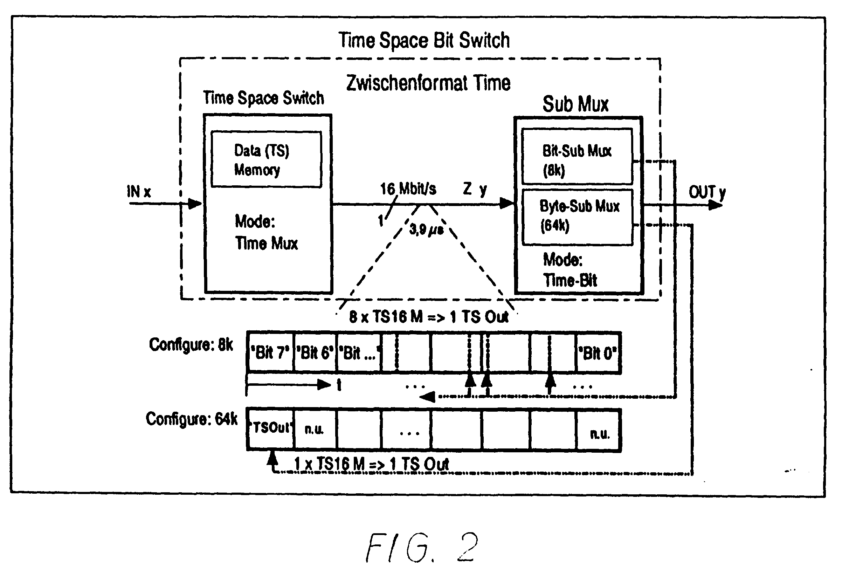

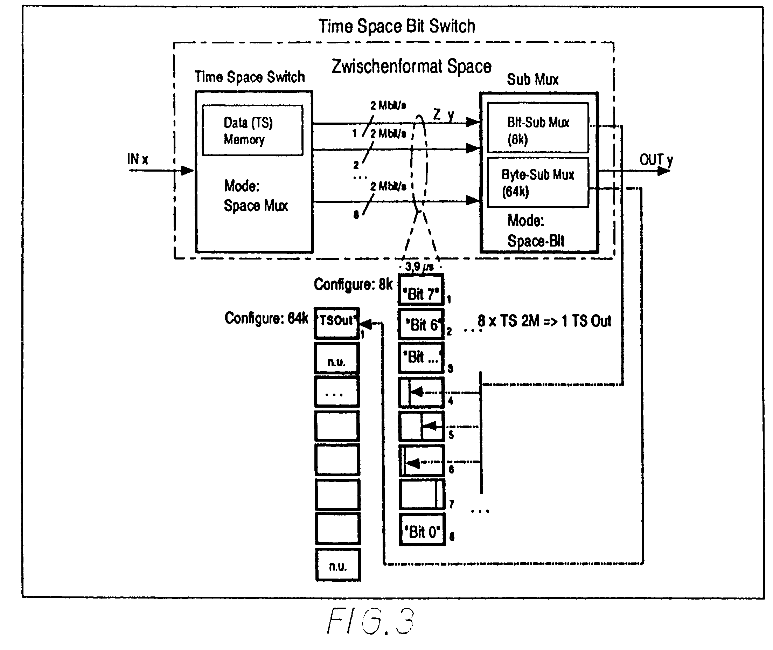

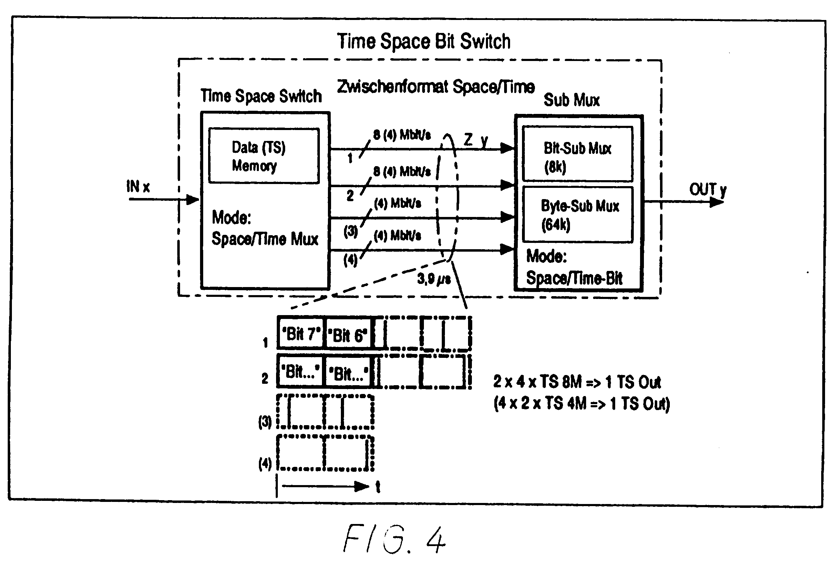

Für die Weiterleitung der achtfachen Datenrate, die als Zwischenformat Z bezeichnet wurde, sind bei Nutzung von Standard-Koppelbausteinen drei Varianten möglich:
1. Die Ausgangssignale der Standard-Koppelbausteine haben eine achtfach höhere Taktrate und werden so weiterverarbeitet: Zwischenformat Time (Fig. 2) oder Zeitmultiplex;
2. es werden acht Ausgänge der Standard-Koppelbausteine genutzt:
   Zwischenformat Space (Fig. 3) oder Raummultiplex;
3. eine Kombination aus Datenrate und Signalanzahl wird verwendet, wobei eine Kombination aus vierfacher Datenrate mit zwei Signalen oder doppelte Datenrate mit vier Signalen möglich ist: Zwischenformat Space/Time (Fig. 4) oder Raum/Zeitmultiplex.

Die beiden Varianten 1 und 2 stellen Grenzfälle der dritten Variante dar.

Die verfügbaren Koppelfeldbausteine enthalten bereits ein Kombinationsvielfach, eine Schaltung in Raum- und Zeitlage, für 64k-Kanäle für verschiedene Bitraten der DS2-Eingänge und DS2-Ausgänge. Damit kann die 64k-Schaltebene einfach realisiert werden.

Im Haltespeicher wird für die 64k-Schaltebene lediglich eine Quell-Adresse pro abgegebenen Zeitschlitz/Byte benötigt und das durchgeschaltete komplette Byte kann im Submultiplexer komplett dem Zwischenformat entnommen werden und am zugeordneten DS2-Ausgang OUT gesendet werden.

Da sich die Betriebsart der verfügbaren Koppelbausteine nicht portindividuell sondern nur global konfigurieren läßt, die Schaltebene im Koppelfeld jedoch portbezogen einstellbar sein soll, werden, wie bereits beschrieben, für beide Schaltebenen 64k und 8k, die gleichen Bitraten im Zwischenformat Z genutzt.

Bei der Variante des Zwischenformats Space mit 2 Mbit/s (Fig. 3) hat der Byte-Submultiplexer praktisch keine Demultiplexfunktion und eines der dafür fest vorgesehenen ankommenden Signale des Zwischenformates Z kann direkt zum Signalausgang OUT verbunden werden. Für die Realisierungsvarianten mit Bitraten des Zwischenformats größer 2 Mbit/s arbeitet er dagegen als fest eingestellter Demultiplexer und leitet ein fest vereinbartes komplettes Byte zum Ausgang (Fig. 2 bzw. 4), wobei die Datenrate bei der Ausgabe auf 2Mbit/s umzusetzen ist.

Da das Demultiplexschema jedoch in allen Fällen festliegt, ist kein Haltespeicher, d. h. keine weitere Steuerinformation, Switch-Control, für die 64k-Ebene erforderlich.

Im folgenden werden die drei genannten Zwischenformate und die Schaltungsrealisierungen für die darauf abgestimmten Signalverarbeitungen im ersten und zweiten Schaltungsblock, Time-Space-Switch und Sub-Mux für beide Schaltebenen erläutert. Auf eine Darstellung und Beschreibung der Schaltungsteile, Signale und Abläufe, die für eine Implementierung der Koppelfeldanordnung erforderlich sind, aber in bekannter Weise realisiert werden können, wird verzichtet. Dies betrifft z. B. die Takt- und Rahmensignale, die Schnittstelle zur Steuerung und weitere bekannte Details, wie die Adreßschemata in den Koppelbausteinen.

### 1. Zwischenformat im Zeitmultiplex

Figur 2 zeigt einen Koppelfeldausschnitt mit der Schaltung vom Eingang INx zu einem beliebigen Ausgang OUTy und das zugehörige Zwischenformatsignal Zy. Anhand eines Ausgangs-Zeitschlitzes y wird der Aufbau des Zwischenformates Zeitmultiplex, in Fig. 2 als Zwischenformat Time bezeichnet, beschrieben: Pro Koppelfeld-Ausgangssignal wird ein 16 Mbit/s-Digitalsignal verwendet. Vom Rahmenanfang aus gezählt bilden jeweils 8 aufeinanderfolgende 16M-Zeitschlitze eine Gruppe, wobei der erste 16M-Zeitschlitz in zeitlicher Reihenfolge das Quell-Byte, Bit 7, für das erste Bit des zugehörigen 2 Mbit/s-Zeitschlitzes enthält usw.

Zur Realisierung dieses Formates sind die Koppelelemente für diese Ausgangsdatenrate von 16 Mbit/s zu konfigurieren, in Fig. 2 als Mode-Time-Mux bezeichnet. In deren Haltespeicher sind die entsprechenden Schaltungen für die Achtergruppe, d. h. die 8 Quell-Adressen für die 8 Ausgangs/Ziel-Bits einzutragen. Dies geschieht unter den Haltespeicheradressen, die entsprechend dem Ausleseschema des Bausteins dem gewünschten Ausgangssignal und den Ausgangsschlitzen entsprechen. Mit Bit 7 wird hier das Bit bezeichnet, das im PCM-Signal pro Zeitschlitz zuerst gesendet bzw. empfangen wird.

Diese Anordnung der Nachrichteninformation in Sendefolge gestattet eine einfache Realisierung des Sub-Multiplexers, der das zeitserielle Zwischenformat verarbeitet, in Fig. 2 als Mode-Time-Bit bezeichnet, d. h. entsprechend dem Eintrag im Haltespeicher wird aus jedem Quell-Byte Bit 7...0 das eine gewünschte Bit ausgewählt. In Fig. 2 ist diese Schaltungsoperation durch strich- und doppelpunktierte Pfeile symbolisiert, wobei beispielhaft das betreffende Bit innerhalb des 16M-Zeitschlitzes strichpunktiert markiert ist. In Kurznotation 8 x TS16M =>1 TS Out soll das Zeichen => die Demultiplexoperation symbolisieren.

Der Haltespeicher im Submultiplexer enthält pro Ausgangssignal die Quell-Bit-Adresse für 32 Zeitschlitze mit je 8 Bit, also 32 x 8 = 256 Adressen, d. h. eine Adreßbreite 8, die in der Sendereihenfolge, am Anfang Zeitschlitz 0, Bit 7...0, dann Zeitschlitz 1, Bit 7...0 usw. bis Zeitschlitz 31, Bit 7...0, angeordnet sind und zyklisch, d. h. periodisch in jedem PCM-Rahmen, ausgelesen werden. Die Quell-Bit-Adresse ist, wie bereits erläutert, ein 3 Bit-Wert für die acht möglichen Positionen im Quell-Byte. Der Submultiplexer kann somit als 8 zu 1-Demultiplexer mit 3 Bit-Auswahlsignal realisiert werden.

Dazu ist eine Zwischenspeicherung des 16M-Zeitschlitzes, des Quell-Oktetts, nötig. Eine wesentlich einfachere Methode ist es, den Demultiplexer direkt zu realisieren, d. h. die Bit-Auswahl zeitlich vorzunehmen. Durch einen aus dem Haltespeicher ladbaren Zähler wird das gewünschte Bit aus dem Oktett durch Abzählen ermittelt und zum Ausgang geleitet.

Das erläuterte rein zeitliche Zwischen- bzw. Multiplexformat erfordert eine relativ hohe Daten- und Taktrate der Schaltung, zeichnet sich indessen durch große Einfachheit in der Schaltungsrealisierung und in der Ablaufsteuerung aus. Ein weiterer Vorteil besteht darin, daß im Zwischenformat zur Verbindung der beiden Schaltungsblöcke pro Port nur ein Signal, d. h. eine Leitung, benötigt wird.

Die Funktion des Submultiplexers in der 64k-Schaltebene Byte-Sub-Mux beschränkt sich auf das feste Demultiplexen eines kompletten Quell-Bytes TSOut aus dem 16 Mbit/s-Signal des Zwischenformates. Anschließend folgt die Ausgabe im 2 Mbit/s-Takt. Um ein einfaches Takt- und Ablaufschema in der Schaltung zu ermöglichen, wird z. B. das erste Byte in der Achtergruppe gewählt. Dies bedeutet, daß im Haltespeicher des Time-Space-Switch die eine Quell-Adresse pro 64k-Schaltung für diesen ersten 16M-Zeitschlitz der Achtergruppe eingetragen werden muß. Die restliche Transportkapazität des Zwischenformates bleibt in der 64k-Ebene zunächst ungenutzt (n.u.). Sie ist eine Basis für die Realisierung einer integrierten CAS-Switch-Funktion.

Der Submultiplexer ist für die benötigte Komplexität der Schaltung und die notwendige Verarbeitungsgeschwindigkeit problemlos mit gängigen Technologien realsierbar, wobei die Signalverarbeitung für mehrere Ports bzw. Ausgangssignale zusammenfaßbar ist.

### 2. Zwischenformat im Raummultiplex

Figur 3 zeigt wie als Zwischenformat pro Ausgangssignal auch 8 Signale mit jeweils 2 Mbit/s-Bitrate verwendbar sind. Im Gegensatz zur rein zeitseriellen Verarbeitung handelt es sich hierbei um eine Art Parallel- oder Bus-Format. Der Vorteil gegenüber der Zeitmultiplex-Variante liegt in der geringen Daten- bzw. Taktrate für die beiden Schaltungsteile. Sie bietet sich daher an, wenn Koppelbauelemente mit geringerer Taktrate, aber möglichst großer Anzahl von Ausgängen, verfügbar sind. Nachteilig ist, daß pro Fort je 8 Signale bzw. Leitungen im Zwischenformat erforderlich sind. Weiterhin ist der Schaltungsaufwand größer, inklusive der Ablaufsteuerung und der Zwischenspeicherung, die zur Parallel-Serien-Wandlung des Ausgabesignals am Eingang oder Ausgang des Submultiplexers Mode-Space-Bit erforderlich ist.

In Figur 3 ist dargestellt, daß im Zwischenformat jeder Bit-Position im Zeitschlitz des Ausgangssignals ein eigenes Signal bzw. eine separate Zwischenleitung zugeordnet ist. Zweckmäßigerweise werden aufeinander folgende Ausgänge des Kombinationsvielfaches Time-Space-Switch genutzt. Im Time-Space-Switch sind somit die Quell-Adressen für die acht 8k-Kanäle, d. h. die Bit-Position pro Ausgangszeitschlitz, unter den Haltespeicher-Adressen der jeweils gleichen Zeitschlitze für alle acht gewählten Ausgänge einzutragen.

Die im Submultiplexer parallel, d. h. zeitgleich, ankommenden acht Quell-Bytes können zwischengespeichert werden, um sie dann in der bereits im vorgehenden Abschnitt beschriebenen Weise durch den Bit-Demultiplexer Bit-Sub-Mux weiterzuverarbeiten. Dazu ist nur ein Submultiplexer erforderlich, der aber wiederum je 2 Mbit/s-Zeitschlitz alle acht Quell-Bytes verarbeiten muß. Alternativ sind die acht Eingangssignale parallel mit acht Submultiplexern verarbeitbar und deren Ergebnisse, d. h. die acht Bits des Ausgangszeitschlitzes, werden vor der Ausgabe zwischengespeichert. In beiden Fällen wählt der Bit-Sub-Mux wiederum gesteuert durch die 3 Bit-Schaltinformation aus dem Bit-Control-Memory, in Fig. 3 nicht dargestellt, das gewünschte Quell-Bit aus.

Praktisch ohne Aufwand kann dagegen die 64k-Schaltebene im Submultiplexer realisiert werden. Das durch entsprechende Programmierung im Schaltungsteil Time-Space-Switch ausgewählte 2M-Signal, in Fig. 3 das erste Signal im Zwischenformat, wird einfach zum Ausgang OUTy durchgeschaltet.

### 3. Zwischenformat im Raum-Zeitmultiplex

Die Schaltungsanordnung mit dem Zwischenformat Space-Time verwendet die Kombination von zeitseriellen und parallelen Signalen. Daher sind die in den vorstehenden Varianten genannten Elemente und Arbeitsweisen im Submultiplexer ebenfalls in entsprechender Kombination anzuwenden, im Sub-Mux der Fig. 4 als Mode-Space-Time-Bit bezeichnet. Das gleiche gilt auch für die Programmierung des Mode-Space-Time-Mux, der das gemischte Zwischenformat erzeugt. Der bereits erwähnten Einheitlichkeit der Konfigurationseinstellung der Koppelbausteine wegen sind die beiden Teilformate 2 * 8 Mbit/s mit je 4 Quell-Bytes und 4 * 4 Mbit/s mit je 2 Quell-Bytes sinnvoll. Die letztere Variante ist in Fig. 4 eingeklammert bzw. gestrichelt dargestellt.

Die Realisierung der Forderung nach Rahmenintegrität hat grundsätzlich eine Laufzeit durch das Koppelfeld von zwei Rahmen zur Folge. Dabei dient ein Rahmen der Realisierung von Schaltungen zu Zeitlagen, die im Rahmen früher angeordnet sind. Ein weiterer Rahmen ist durch endlichen Verarbeitungszeiten der Technologien bedingt. Einige Koppelbausteine haben die Möglichkeit, zwei Rahmen als Durchlaufzeit zu konfigurieren und garantieren so bereits schaltungstechnisch die Rahmenintegrität uneingeschränkt für alle Zeitschlitze bzw. Kanäle der Eingangssignale. Für die vorgeschlagene Lösung von 8k/64k-Koppelfelder mit Nachschaltung eines Submultiplexers erhält man daher als Grundverzögerung die Dauer von drei PCM-Rahmen oder es ist auf ein ganzzahliges Vielfaches zu verzichten und der Rahmenrhythmus zu verlassen. Die Laufzeit erhöht sich dann nur um die tatsächliche Verarbeitungszeit im Submultiplexer.

Andere Koppelbausteine garantieren die Rahmenintegrität nur eingeschränkt. Die Rahmenintegrität gilt nicht für die letzten Zeitschlitze des Eingangsrahmens, wenn diese auf die ersten Zeitschlitze des Ausgangsrahmens geschaltet werden sollen. Falls sehr große mehrstufige Koppelanordnungen, z. B. 3-stufige Clos'sche Matrix, mit diesen Bausteinen zu realisieren sind, kann durch ein entsprechendes Routingprogramm nicht nur die Blockierungsfreiheit der Matrix gesichert, sondern auch zusätzlich die Forderung nach Rahmenintegrität berücksichtigt werden. Zu diesem Zweck ist beim Routing stets ein Signalpfad zu wählen, der einerseits keine Blockierung hervorruft und andererseits in der Summe der Einzelverzögerungen der Teilstufen stets die konstante Grundverzögerung von zwei Rahmen ergibt. Dazu ist für die Koppelbausteine ein Betriebsmodus mit sogenannten variablen Laufzeiten zu wählen, die abhängig von der jeweiligen Schaltung sind. Die hier betrachtete einfache einstufige Zusammenschaltung der Koppelbausteine ohne Routingalgorithmus kann auf eine solche Lösung nicht zurückgreifen.

In den Koppelbausteinen, die zur Verwendung in herkömmlichen 64k-Matritzen konzipiert wurden, sind die Kapazität von Datenspeicher und Haltespeicher stets aufeinander abgestimmt. Diese Balance zwischen Eingängen und Ausgängen wurde zur Realisierung der beschriebenen 8k-Schaltebene in den Fig. 1 bis 4 bisher außer Acht gelassen, ein Umstand, der nun ausnutzbar ist. Die Schaltkapazität eines Koppelbausteins, der hinsichtlich der Zahl der verfügbaren Ausgangs-Zeitschlitze vollständig ausgenutzt wird, ist bezüglich der möglichen Eingangskanäle nicht ausgelastet. So ist beispielsweise beim Zwischenformat Time, Fig. 2, das Verhältnis von bisher betrachteter Eingang-Bitrate von 2 Mbit/s und Ausgangs-Bitrate von 16 Mbit/s 1:8. Dem steht eine Relation von 16 vorhandenen Bausteineingängen zu 4 nutzbaren Ausgängen, also das Verhältnis 4:1 gegenüber. Um die mögliche Eingangskapazität vollständig auszulasten ist ein Verhältnis von 1:4 für die Bitraten herzustellen und damit am Eingang eine Datenrate von 4 Mbit/s vorzusehen. Bei 4 Mbit/s sind im PCM-Rahmen, der in seiner Zeitdauer konstant 125µs beträgt, nicht 32 sondern 64 Zeitschlitze vorhanden. Wenn es gelingt, die 2 Mbit/s-Eingangssignale des bisher beschriebenen Time-Space-Bit-Switch so auf 4 Mbit/s umzusetzen, daß diese rahmeninteger durchzuschaltenden 32 Zeitschlitze am Anfang des 4 Mbit/s-Signals liegen, ist das Problem der gleichen Laufzeit für alle im Rahmen gemeinsam ankommenden Kanäle gelöst. Die Einschränkung zur Rahmenintegrität des Koppelsteins beziehen sich nur auf die letzten Schlitze des Eingangsrahmen, die nun nicht belegt sind.

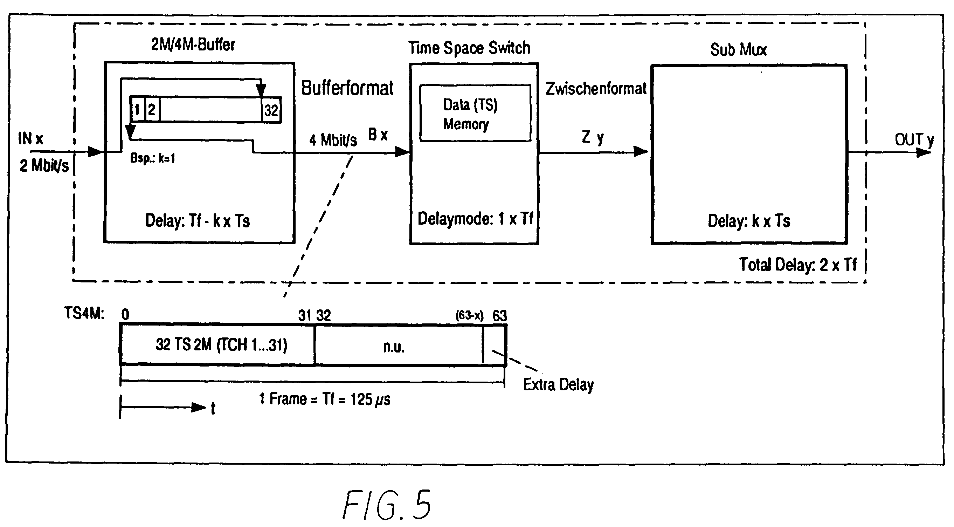

Eine Verdopplung der Eingangs-Bitrate wird durch einen Rahmenpuffer für die 32 Eingangsschlitze, durch den 2M/4M-Buffer, realisiert, der nach dem First-In-First-Out-Prinzip arbeitet. Die Besonderheit besteht darin, daß dessen Inhalt mit der einfachen Taktrate eingeschrieben, einen Rahmen später jedoch mit der doppelten Taktrate ausgelesen wird. Das Auslesen der 32 Eingangswerte ist nach der halben Rahmendauer beendet und wird bis zum folgenden Rahmenbeginn gestoppt. Das ist der Zeitpunkt, zu dem der nächste Eingangsrahmen vollständig eingelesen wurde. Figur 5 zeigt schematisch die Lage der 32 2M-Eingangszeitschlitz auf den Rahmenpositionen 0...31 des 4M-Rahmens. Das Signal am Pufferausgang, das zum Koppelstein gelangt, wird in Fig. 5 mit Bx bezeichnet. Der Index x weist darauf hin, daß sich die Eingangskanäle, abgesehen von der Vorverlegung in die erste Rahmenhälfte, im Prinzip noch an gleicher Stelle befinden, d. h. noch nicht durchgeschaltet sind. Somit wird der Pufferspeicher beschrieben und gleichzeitig auf anderer Adresse mit doppelter Zugriffsrate ausgelesen.

Ein solcher Doppelzugriff läßt sich beispielsweise mit Schieberegisterketten realisieren, wenn diese mit speziellen Zyklen, wie z. B. Shift/Write-Read-Read..., angesteuert werden. Eine elegantere Implementierung ist mit sogenannten Dualport-RAM-Strukturen möglich. Sie verfügen nicht nur über getrennte Ein- und Ausgänge für die Daten, sondern auch über zwei separate Gruppen von Adressen. Mit der einen Gruppe werden die Eingangsdaten adressiert, d. h. die Schreibadressen angelegt und mit der anderen die Ausgangsdaten adressiert, d. h. die Leseadressen angelegt. Mit dieser Vorverarbeitung des Eingangssignals kann ein sogenannter Constant-Delay-Modus der Koppelbausteine genutzt werden, der mit Ausnahme der Zeitschlitze vom 4M-Rahmenende für alle übrigen Eingangs-Zeitschlitze eine konstante Grundverzögerung von einem Rahmen und damit die Rahmenintegrität garantiert.

Der Eingangspuffer kann nun zusätzlich zur Vorkompensation der Verarbeitungszeit im Submultiplexer genutzt werden. Zu diesem Zweck wird mit dem Auslesen aus dem Puffer begonnen, bevor der Eingangsrahmen vollständig eingeschrieben wurde (Rahmendauer Tf). Ist die Zeit hierfür so gewählt, daß sie der Signalverzögerung im Submultiplexer entspricht, ergibt sich in der Summe die gewünschte Durchlaufzeit von zwei Rahmen. Für ein einfaches Takt- und Ablaufschema der Schaltungsrealisierung ist es zweckmäßig, eine Vorkompensationszeit von ganzzahligen Vielfachen der Zeitschlitze k * TS zu wählen und im Submultiplexer diesen Wert als Verarbeitungszeit zu realisieren. In Fig. 5 ist als Beispiel die Vorkompensation mit einem Zeitschlitz angegeben, d. h. das Auslesen der ersten Position 1 aus dem Pufferspeicher beginnt bereits zum Zeitpunkt zu dem die letzte Position 32 noch geschrieben wird. Prinzipiell kann bei doppelter Leserate das Auslesen bereits nach der ersten Rahmenhälfte beginnen. So können auch kürzere Gesamtdurchlaufzeiten mit Rahmenintegrität erzielt werden, die dann allerdings nicht mehr im Raster der PCM-Rahmen liegen.

### Schaltungsanordnung für integrierte 64k/CAS-Koppelfeldfunktion

Zur Verarbeitung von PCM-Signalen für 30 Nutz-Zeitschlitze mit kanalzugeordneter Signalisierung der Sprachkanäle im Zeitschlitz 16 (CAS = Channel Associated Signaling) ist es erforderlich, diese Signalisierungsinformation ebenfalls durchzuschalten.

Hierzu werden die CAS-Signalisierungsbits abcd dem CAS-Mehrfachrahmen, im Zeitschlitz 16 der ankommenden Signale, entnommen und zum Standard-Koppelbaustein, Time Space Switch, transportiert und, zusätzlich zu den Sprachkanälen, im Data Memory abgelegt. Nach der entsprechenden Durchschaltung werden sie wieder als CAS-Mehrfachrahmen in den Zeitschlitz 16 der abgehenden Signale eingefügt. Die CAS-Durchschaltung wird unter Nutzung von Kapazitäten des Daten- und Haltespeichers im Standard-Koppelbaustein realisiert, die in der 64k-Schaltebene bisher nicht benötigt wurden. Neben der Quell-Adresse für den abgehenden Sprachkanal, wird auch die zugeordnete Quell-Adresse für das Signalisierungs-Nibbel in den Haltespeicher eingetragen. Analog zum Prinzip der 8k-Schaltebene wird auch hier zunächst redundante Information, nämlich das im Quellbyte ebenfalls enthaltene andere, nicht benötigte abcd-Nibble, mit zum Ausgang übertragen. Im Sub-Multiplexer kann dann für jeden Ziel-Nutz-Zeitschlitz das richtige Nibble ausgewählt werden. Um den 16 Byte umfassenden CAS-Rahmen komplett nibbelweise zu schalten sind insgesamt 32 Steuerbits im Control Memory des Sub Mux erforderlich.

Damit können, analog zur Schaltung der Zeitschlitze des PCM-Rahmens, auch auf CAS-Ebene alle Informationen, d.h. inklusive Rahmen- und Meldeworte transparent durchgeschaltet werden.

Die CAS-Switch-Funktionalität ist somit integraler Bestandteil des Koppelfeldes, d.h. es wird kein zusätzliches CAS-Switch-Modul benötigt.

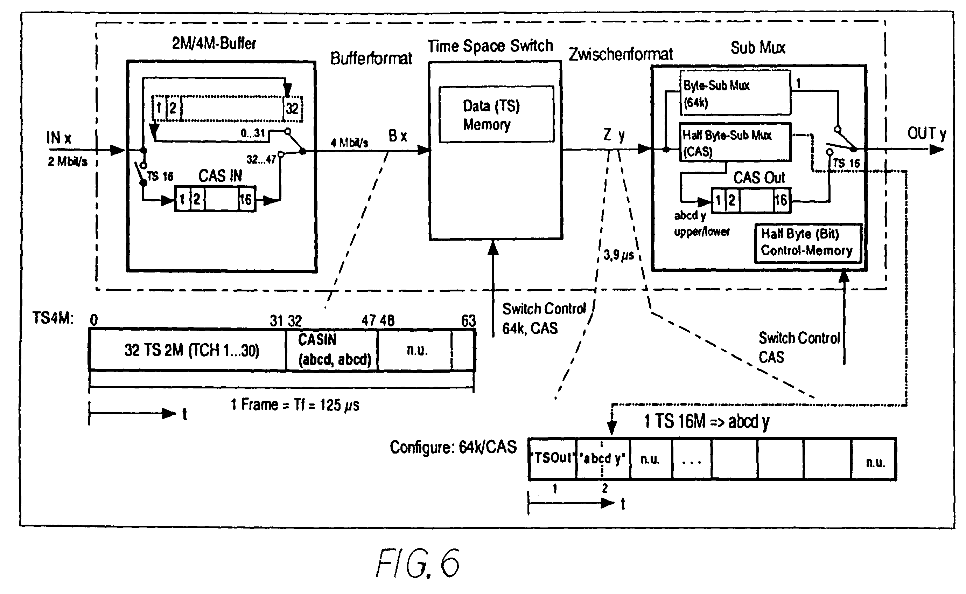

Dieses Prinzip ist in der Fig. 6 dargestellt. Die Bytes des CAS-Mehrfachrahmens werden dem Zeitschlitz 16, TS 16, aus sechzehn aufeinanderfolgenden PCM-Rahmen entnommen und in die sechzehn Positionen des CAS-IN-Puffers geschrieben. Aus diesem Puffer werden sie in den noch freien Positionen 32...47 des Bufferformat-Signals Bx zum Time Space Switch übertragen und dort zyklisch in den Datenspeicher, Data Memory, abgelegt. Fig. 6 zeigt die Belegung des Signals Bx mit den 32 Zeitschlitzen bzw. Bytes des PCM-Rahmens und den 16 CASIN-Bytes. Die Steuerung, Switch Control CAS, kann nun anhand der bekannten Position des Signalisierungs-Nibbels auch das Quellbyte für die CAS-Information, abcd x, eines Nutz-Zeitschlitzes, TCH x, zum Ausgang schalten und als Zwischenformat Zy zum Sub-Multiplexer leiten. Dies geschieht in direkter Zuordnung zu dem durchgeschalteten Nutzkanal x. In Fig. 6 ist als Beispiel für das Zwischenformat Zeitmultiplex dargestellt, daß sich hierfür die unmittelbar benachbarte Position im Zwischenformat Zy anbietet. Die Auswahl des richtigen abgehenden Halbbytes, abcd y, erfolgt durch den Half Byte Sub-Mux (CAS), der es in den CAS Out-Puffer ablegt. Bei dieser ausgangsseitigen Zwischenspeicherung des abgehenden CAS-Mehrfachrahmens können die zu sendenden abcd-Bits entweder in der vorgeschriebenen Reihenfolge sofort 16 Byte organisiert abgespeichert werden (abcd y: upper, lower), wie es Fig. 6 zeigt, oder erst beim Auslesen aus einem Half Byte-organisierten CAS-Speicher (32 x 4) zusammengestellt werden. Als Half Byte Sub-Mux könnte prinzipiell, bei entsprechend programmierter Schaltinformation und Zwischenspeicherung des CAS-Quellbytes, auch der Bit-Submultiplexer der 8k-Ebene mitgenutzt werden. Steuerungsseitig einfacher ist jedoch ein in Fig. 6 dargestellter separater Half Byte Sub-Mux (CAS). Korrespondierend zur Reihenfolge der Adressen für Nutz- und Signalisierungsinformation des Control Memory im Time Space Switch ist durch die Switch Control CAS die Auswahl des gewünschten Nibbels abcd y durch einen Eintrag in den Haltespeicher des Sub Mux vorzunehmen. Dies ist dasselbe Control-Memory wie für die 8k-Ebene. Zur Unterscheidung dieser CAS-Funktion ist es in Fig. 6 als Half Byte (Bit) Control-Memory bezeichnet. Bei CAS-Schaltungen mit einem extra Half Byte Sub-Mux wird allerdings, z.B. entsprechend des Zwischenformates in Fig. 6, nur jeder achte Speicherplatz, d.h. nur 32 von 256, mit je einem Controlbit belegt.

### Schaltungsanordnung für das Einfügen portindividueller Idle- und Trunk-Codes (Pattern)

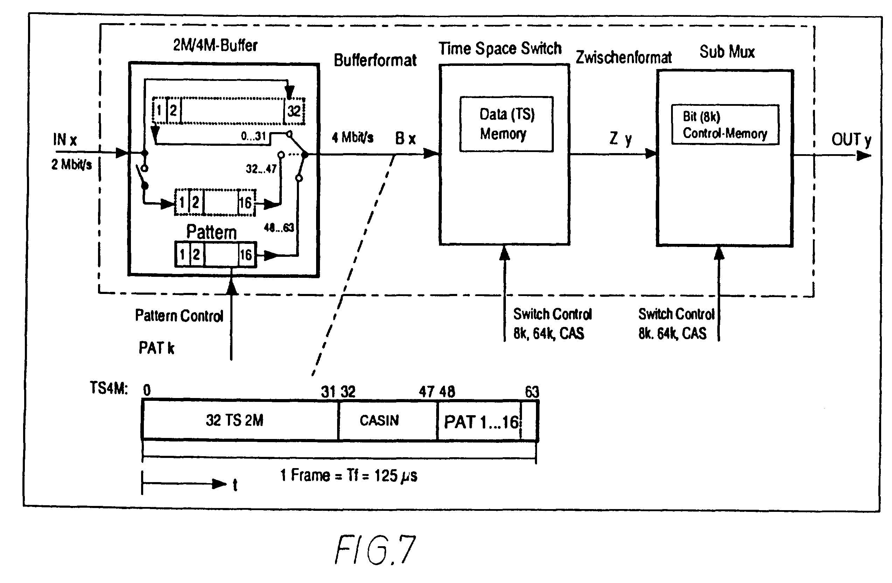

Zu Signalisierungszwecken, für Idle-Zustände oder Alarm-Zustände, werden gezielt definierte Bitkombinationen in die Zeitschlitze des PCM-Rahmens, auch im CAS-Mehrfachrahmen, eingefügt. Damit dies nicht nur für die 64k-Schaltebene sondern auch für die 8k-Schaltebene uneingeschränkt und Signalport-individuell möglich ist, wird diese Funktion durch die in Fig. 7 dargestellten Schaltungsanordnung im Koppelfeld selbst realisiert.

Das Prinzip besteht darin, daß zum Einfügen dieser hier allgemein als Pattern, PAT k, bezeichneten Bytes wiederum noch verfügbare Kapazitäten im Buferrformat-Signal Bx bzw. noch freie Schaltkapazitäten im Time Space Switch genutzt werden.

Wie Fig. 7 zeigt, können in die Positionen 48...63 des Bufferformats Bx maximal 16 Pattern, PAT 1...16, eingefügt und zum Time Space Switch transportiert werden. Die dort in fester Reihenfolge abgelegten Bytes werden nun durch die ganz normalen, im vorstehenden bereits beschriebenen Schaltoperationen der 8k- und 64k-Schaltebene sowie der CAS-Schaltfunktion an die gewünschte Stelle, individuell für jedes abgehende Signal, durchgeschaltet und dort byte-, bit- oder halbbyteweise eingefügt. Zu diesem Zweck werden jeweils die entsprechenden Pattern-Quellbytes durch Switch Control 8k, 64k, CAS im Time Space Switch ausgewählt und im Sub Mux daraus die gewünschten Bits, Bytes bzw. Halb-Bytes selektiert.

Damit die Bitmuster, PAT k, frei definierbar bzw. änderbar sind, wird der Pattern-Speicher als RAM-Speicher ausgeführt, der von der Steuerung, Pattern Control, beschrieben wird. Ein aktueller Wechsel der als Idle- oder Trunk-Code zu sendenden Bitmuster ist damit entweder durch Auswahl eines anderen, bereits im Pattern-Speicher eingetragenen Musters oder durch einer neue Eintragung an der selben Position, d.h. durch Überschreiben des bisher verwendeten Musters realisierbar. Im ersten Fall sind Schaltoperationen durch die Switch Control erforderlich, im zweiten Fall ein Eintrag durch die Pattern Control. Letzteres bietet sich an, wenn ein Code geändert werden soll , der mehrfach verwendet wird (z.B. 64k-Idle Code in allen Zeitschlitzen).

Da es sich bei den Mustern PAT k um zwar frei definierbare, aber feste Worte bzw, Bits handelt, spielt die Verzögerungszeit bzw. Rahmenintegrität keine Rolle. Es können also, wie in Fig. 7 gezeigt, falls erforderlich, auch die letzten Positionen in Bufferformat Bx belegt werden.

## Patentansprüche

1. Schaltungsanordnung zur Steuerung von unterschiedlichen Signal-Bitraten von blockierungsfreien Koppelfeldanordnungen für 2 Mbit/s-Digitalsignale, dadurch gekennzeichnet, daß das Koppelfeld aus der Hintereinanderschaltung einer herkömmlichen PCM-Koppelanordnung (Time-Space-Switch) und eines Submultiplexers (Sub-Mux) besteht, wobei die Ausgangssignale der PCM-Koppelanordnung (Time-Space-Switch) in einem speziellen Zwischenformat (Z) ausgegeben werden, die es dem Submultiplexer (Sub-Mux) gestatten durch einfache Demulitplexoperationen Durchschaltungen unterschiedlicher Schaltebenen (8k, 64k) zu erzeugen, wobei die Schaltinformationen für die 8k-Ebene auf die PCM-Koppelanordnung und den Submultiplexer aufgeteilt wird.

2. Schaltungsanordnung nach Anspruch 1, dadurch gekennzeichnet, daß die Zwischenformate (Z) für unterschiedliche Schaltebenen (8k, 64k) sich in der Signalstruktur unterscheiden, wobei für die eine Schaltebene (64k) nur ein Teil des für die andere Schaltebene (8k) verwendeten Zwischenformats genutzt wird und jeweils für beide Schaltebenen die gewünschte Sendereihenfolge bezüglich Port und Zeitschlitz (64k, 8k) und Bitposition (8k) bereits im Zwischenformat vorhanden ist.

3. Schaltungsanordnung nach Anspruch 1, dadurch gekennzeichnet, daß die Zwischenformate (Z) im Zeitmultiplex weitergeleitet werden.

4. Schaltungsanordnung nach Anspruch 1, dadurch gekennzeichnet, daß die Zwischenformate (Z) im Raummultiplex weitergeleitet werden.

5. Schaltungsanordnung nach Anspruch 1, dadurch gekennzeichnet, daß die Zwischenformate (Z) im Raum- und Zeitmultiplex weitergeleitet werden.

6. Schaltungsanordnung nach Anspruch 1 und 3, dadurch gekennzeichnet, daß als Zwischenformat (Z) im Zeitmultiplex pro Ausgangssignal die achtfache Datenrate, d. h. ein 16 Mbit/s-Digitalsignal verwendet wird, das zeitseriell im Submultiplexer verarbeitet wird.

7. Schaltungsanordnung nach Anspruch 1 und 4, dadurch gekennzeichnet, daß das Zwischenformat (Z) im Raummultiplex acht Signale zu je 2 Mbit/s pro Ausgangssignal verwendet, die im Submultiplexer eingangsseitig zwischengespeichert und danach seriell weiterverarbeitet werden.

8. Schaltungsanordnung nach Anspruch 1 und 4, dadurch gekennzeichnet, daß das Zwischenformat (Z) im Raummultiplex acht Signale zu je 2 Mbit/s pro Ausgangssignal verwendet, die im Submultiplexer parallel verarbeitet und danach ausgangsseitig seriell weiterverarbeitet werden.

9. Schaltungsanordnung nach Anspruch 1 und 5, dadurch gekennzeichnet, daß das Zwischenformat (Z) im Raum- und Zeitmultiplex aus einer Kombination von zeitseriellen und parallelen Signalen in der Kombination zwei 8 Mbit/s-Signale pro Ausgangssignale im Submultiplexer weiterverarbeitet werden.

10. Schaltungsanordnung nach Anspruch 1 und 5, dadurch gekennzeichnet, daß das Zwischenformat (Z) im Raum- und Zeitmultiplex aus einer Kombination von zeitseriellen und parallelen Signalen in der Kombination von vier 4 Mbit/s-Signale pro Ausgangssignal im Submultiplexer weiterverarbeitet werden.

11. Schaltungsanordnung nach Anspruch 1, dadurch gekennzeichnet, daß der PCM-Koppelanordnung (Time-Space-Switch) ein Rahmenpuffer (2M/4M-Buffer) vorgeschaltet ist, der eine Verdopplung der Eingangsbitrate der PCM-Koppelanordnung bewirkt.

12. Schaltungsanordnung nach Anspruch 11, dadurch gekennzeichnet, daß in den Rahmenpuffer (2M/4M-Buffer) Eingangssignale (INx) mit einfacher Taktrate (2M) geschrieben und einen Rahmen danach mit doppelter Taktrate (4M) ausgelesen werden und die 32 Eingangs-Zeitschlitze des 2 Mbit/s-PCM-Rahmens auf die ersten 32 Positionen (Zeitschlitze 0...31) des 4 Mbit/s-Signals ausgegeben und zur PCM-Koppelanordnung geleitet werden.

13. Schaltungsanordnung nach Anspruch 1, 11 und 12, dadurch gekennzeichnet, daß der Rahmenpuffer (2M/4M-Buffer) zur Vorkompensation der Verarbeitungszeit im Submultiplexer (Sub-Mux) genutzt wird, indem mit dem Auslesen des Rahmenpuffers (2M/4M-Buffer) bereits begonnen wird, bevor ein Rahmen vollständig eingelesen ist und diese Vorkompensationszeit der Verarbeitungszeit im Submultiplexer entspricht.

14. Schaltungsanordnung nach Anspruch 1, 11 und 12, dadurch gekennzeichnet, daß aus dem ankommenden PCM-Signal der CAS-Mehrfachrahmen entnommen, zwischengespeichert und in den Zeitschlitzen (32...47) des 4Mbit/s-Signals zur PCM-Koppelanordnung geleitet und im Zwischenformat zugeordnet zu den Nutzkanälen ausgegeben wird.

15. Schaltungsanordnung nach Anspruch 14, dadurch gekennzeichnet, daß der Submultiplexer den CAS-Mehrfachrahmen zwischenspeichert und in das abgehende PCM-Signal einfügt.

16. Schaltungsanordnung nach Anspruch 1, 11 und 12, dadurch gekennzeichnet, daß 16 Bitmuster (Byte) in einem Speicher zwischengespeichert werden und in den Zeitschlitzen (48...63) des 4 Mbit/s-Signals ausgegeben und zur PCM-Koppelanordnung geleitet werden.
